# EUROPEAN PATENT SPECIFICATION

(11) **EP 3 171 500 B1**
(45) Date of publication and mention of the grant of the patent: **14.10.2020**
(21) Application number: 15821758.8
(22) Date of filing: 07.07.2015
(51) Int. Cl.: H02M 1/12, H02J 1/08

(54) **POWER SUPPLY DEVICE**
STROMVERSORGUNGSVORRICHTUNG
DISPOSITIF D'ALIMENTATION ÉLECTRIQUE

(30) Priority: 18.07.2014 JP 2014147562
(43) Date of publication of application: 24.05.2017
(73) Proprietor: Panasonic Intellectual Property Management Co., Ltd., Osaka-shi, Osaka 540-6207 (JP)
(72) Inventor: MINATO, Junji, Osaka 540-6207 (JP)
(74) Representative: SSM Sandmair
(86) International application number: PCT/JP2015/003398
(87) International publication number: WO 2016/009613

(56) References cited:
- EP-A2- 2 566 023
- WO-A1-2006/137590
- JP-A- 2009 095 232
- JP-A- 2009 095 232
- JP-A- 2011 187 702
- JP-A- 2014 121 172
- US-A1- 2013 257 735

## Description

### TECHNICAL FIELD

The present invention relates to a power supply device having a plurality of switching power supplies.

### BACKGROUND ART

When driven, a switching element used in a switching power supply generates harmonic noise and high-frequency noise (hereinafter, referred to as "switching noise") according to a change in a current or a voltage. Since the switching power supply conducts the generated switching noise in an input direction and an output direction of the switching power supply, the switching noise has an effect on devices connected in each of the directions and thereby malfunction occurs. In the related art, a filter for removing the switching noise is provided in a power supply device as a measure to address the switching noise (for example, refer to PTLs 1 and 2).

### Citation List

### Patent Literature

PTL 1: Japanese Patent Unexamined Publication No. 11-89087
PTL 2: Japanese Patent Unexamined Publication No. 2001-298952

The US 2013/0257375 A1 discloses an electrical vehicle having first and second switching converters and a main storage device mounted therein. In external charging, the first converter performs AC/DC power conversion converting power received from an external power supply into power charged to the storage device. When the external charging is not performed and a sub charging relay is turned on, the second converter performs DC/ DC power conversion to convert power of the storage device into power to be charged to an auxiliary battery and outputs the converted power on the predetermined node. An LC filter is interposed on a current path between the first and second converters.

### SUMMARY OF THE INVENTION

The present invention provides a power supply device which can restrict loss due to a filter and an increase in the size of a circuit.

According to an aspect of the present invention, the power supply device has first and second switching power supplies, a noise filter, and shield, as defined in claim 1. The first switching power supply converts power of input power supply and supplies the converted power to a power storage device. The second switching power supply converts power supplied from the first switching power supply or the power storage device and supplies the converted power to a load device. The noise filter reduces noise generated in the first and second switching power supplies. The shield covers the first and second switching power supplies and the noise filter, and blocks electromagnetic noise. The noise filter is provided on a current path between the first switching power supply and the power storage device, between the power storage device and the second switching power supply, and nearer to the power storage device than a branch point at which a power line from the first switching power supply to the power storage device intersects a power line from the second switching power supply to the power storage device. Moreover, a maximum value of a current that is caused by the noise filter to flow is higher than any of a first maximum value of a current that flows from the first switching power supply and a second maximum value of a current that flows to the second switching power supply, and is lower than the total value of the first maximum value and the second maximum value.

According to the present invention, in the power supply device, an increase in loss due to the filter and in the size of the circuit can be restricted.

### BRIEF DESCRIPTION OF DRAWINGS

FIG. 1 is a view illustrating a configuration example of a power supply device in the related art.
FIG. 2 is a view illustrating another configuration example of the power supply device in the related art.
FIG. 3 is a view illustrating a configuration of a power supply device according to an embodiment of the present disclosure.
FIG. 4 is a view illustrating a configuration example of a line filter having a common mode according to the embodiment of the present disclosure.
FIG. 5 is a view illustrating a configuration example of a line filter having no common mode according to the embodiment of the present disclosure.
FIG. 6 is a view illustrating another configuration of the power supply device according to the embodiment of the present disclosure.
FIG. 7 is a view illustrating still another configuration of the power supply device according to the embodiment of the present disclosure.

### DESCRIPTION OF EMBODIMENT

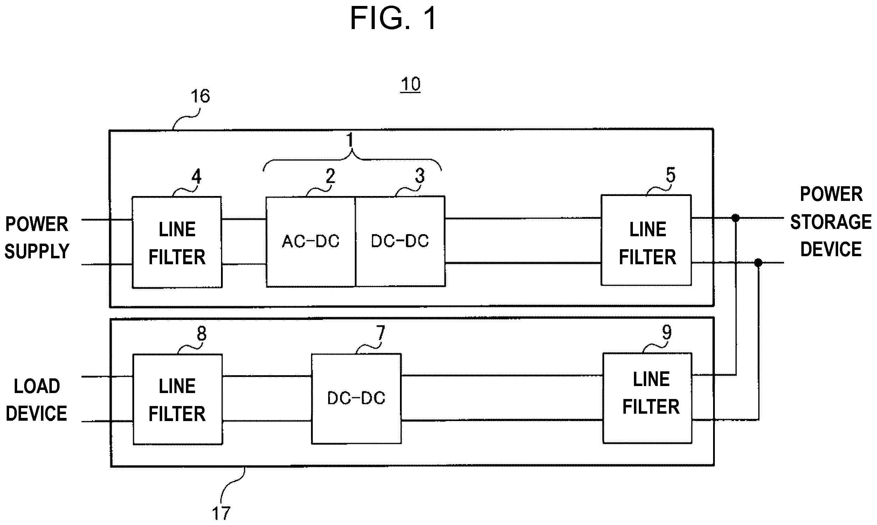

Before explaining an embodiment of the present invention, problems of a power supply device of the related art will be briefly described. FIG. 1 illustrates a configuration example of power supply device 10 of the related art. In power supply device 10, switching power supply 1 converts, by switching, power supplied from a power supply (for example, AC power supply), and supplies the converted power to a power storage device or to a load device via switching power supply 7. In addition, the power storage device supplies stored power to the load device via switching power supply 7. Switching power supply 7 converts, by switching, power supplied from switching power supply 1 or the power storage device (voltage value conversion), and supplies the converted power to the load device. In FIG. 1, switching power supply 1 is configured with AC-DC converter 2 and DC-DC converter 3, and switching power supply 7 is configured with a DC-DC converter. In addition, each of line filters 4, 5, 8, and 9 for removing switching noise is provided on each of an input side and an output side of switching power supply 1 and switching power supply 7. In addition, switching power supplies 1 and 7 and line filters 4, 5, 8 and 9 are covered with shields 16 and 17 for each switching power supply.

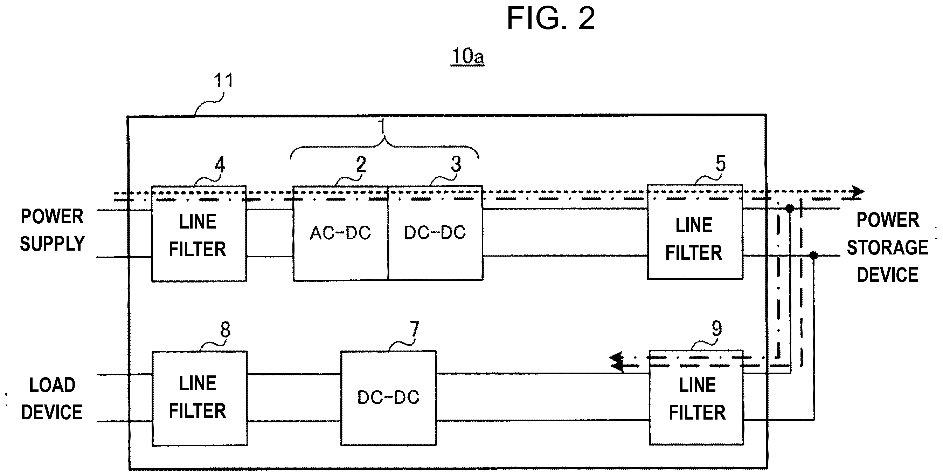

In addition, as illustrated in FIG. 2, inventors have considered power supply device 10a having a configuration in which a plurality of switching power supplies are integrated. The only difference between power supply device 10a and power supply device 10 illustrated in FIG. 1 is that both of switching power supply 1 and switching power supply 7 are covered with one shield 11 in power supply device 10a.

In a case where a circuit configuration illustrated in FIG. 1 is integrated simply by covering with one shield 11, line filters 4, 5, 8, and 9 are provided on both of the input and output sides for each switching power supply, as illustrated in FIG. 2. Accordingly, the size of the power supply device becomes large and the weight thereof increases as well since the number of filters increases as the number of switching power supplies increases. In addition, as illustrated in FIG. 2, even in a case where power from the power supply is directly supplied to the load device without going through the power storage device (path indicated by a one-dotted chain line arrow), the power goes through the two line filters 5 and 9 provided on a side of the power storage device of switching power supplies 1 and 7, thereby increasing loss due to line filters 5 and 9.

As described above, power supply device 10a has problems of an increase in the loss due to line filters 5 and 9 and an increase in the size of the circuit in power supply device 10a.

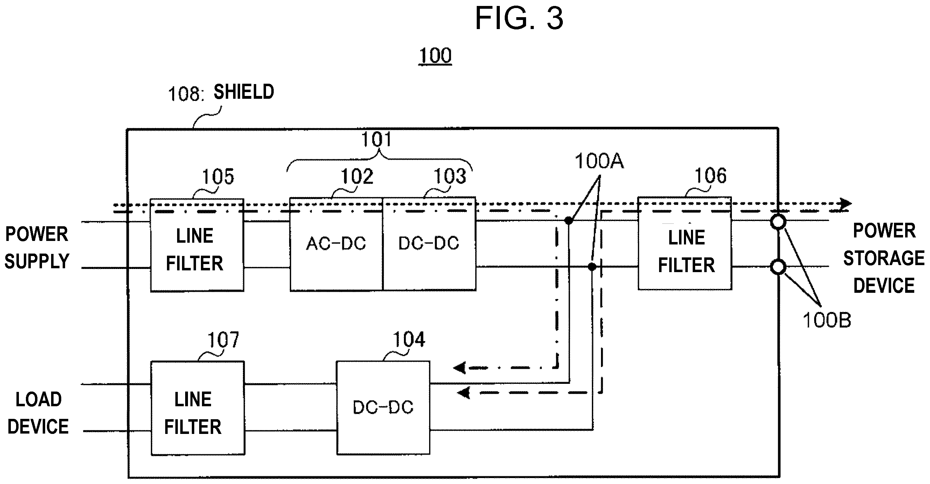

Hereinafter, power supply device 100 according to the embodiment of the present invention will be described with reference to the drawings. FIG. 3 is a view illustrating a configuration example of power supply device 100.

### [Configuration of power supply device 100]

Power supply device 100 is connected to the power supply (input power supply), the power storage device, and the load device via a power line (harness).

Hereinafter, an example of a case where power supply device 100 is mounted in a vehicle will be described. In this case, for example, in FIG. 3, the power supply corresponds to an AC power supply outside the vehicle, the power storage device corresponds to a high-voltage battery. The AC power supply and the high-voltage battery are power supplies for driving a motor of the vehicle or the like. In addition, the load device, for example, corresponds to an electrical component mounted in the vehicle (headlight, wiper or stereo or the like) or a low-voltage battery for driving the electrical component.

Current paths within power supply device 100 include (1) a path taken when charging from the power supply to the power storage device (dotted line arrow), (2) a path taken when supplying power from the power supply to the load device (one-dotted chain line arrow), and (3) a path taken when discharging from the power storage device to the load device (dashed line arrow).

Power supply device 100 has switching power supply 101 (AC-DC converter 102 and DC-DC converter 103), switching power supply 104, line filters 105, 106, and 107, and shield 108. Switching power supply 101 corresponds to a first switching power supply. Switching power supply 104 corresponds to a second switching power supply.

Switching power supply 101 converts power from the power supply by switching. Specifically, AC-DC converter 102 of switching power supply 101 converts AC power supplied from the power supply to DC power. DC-DC converter 103 changes a voltage value of the DC power supplied from AC-DC converter 102. The DC power of which the voltage value has changed by DC-DC converter 103 is supplied to the power storage device or to the load device via switching power supply 104.

Switching power supply 104 converts, by switching, the DC power supplied from switching power supply 101 or the power storage device (voltage value change). Specifically, switching power supply 104 illustrated in FIG. 3 is a DC-DC converter, changes a voltage value of the DC power supplied from DC-DC converter 103 or the power storage device, and then supplies the power to the load device.

Line filters 105, 106, and 107 are noise filters which reduce switching noise generated in switching power supply 101 and switching power supply 104.

Specifically, line filter 105 is provided on a power line between the power supply and switching power supply 101, and removes switching noise generated in switching power supply 101.

Line filter 106 is in between switching power supply 101 and the power storage device and between the power storage device and switching power supply 104, and is provided at a position nearer to the power storage device than branch point 100A at which a power line from switching power supply 101 to the power storage device intersects a power line from switching power supply 104 to the power storage device. That is, line filter 106 is provided between input and output terminal 100B connected to the power storage device and branch point 100A. Line filter 106 may be directly connected to the power storage device without input and output terminal 100B being provided therebetween.

Line filter 106 removes switching noise generated in switching power supply 101 or switching power supply 104. In addition, a maximum value of a current (hereinafter, referred to as "current capacity") that is caused by line filter 106 to flow is lower than the sum of a maximum value of a current that flows from switching power supply 101 (maximum output current) and a maximum value of a current that flows to switching power supply 104 (maximum input current), and is higher than a larger value out of the maximum output current of switching power supply 101 and the maximum input current of switching power supply 104.

Line filter 107 is provided on a power line between the load device and switching power supply 104, and removes switching noise generated in switching power supply 104.

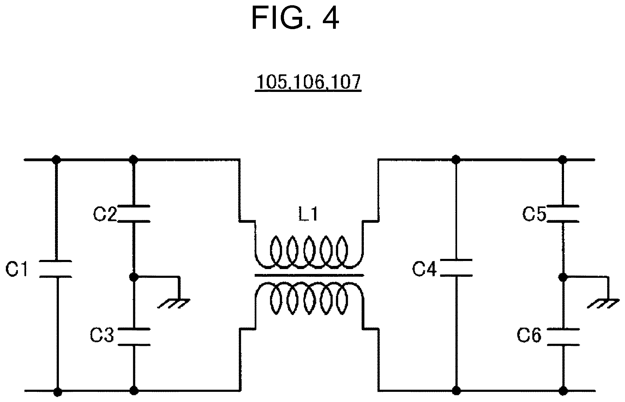

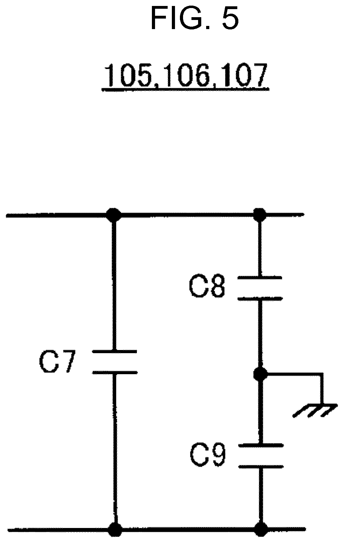

FIG. 4 and FIG. 5 illustrate internal configuration examples of line filters 105, 106, and 107. A configuration having capacitors C1 to C6 and common mode choke coil L1 is adopted in the line filter illustrated in FIG. 4. A configuration having capacitors C7 to C9 without a choke coil is adopted in the line filter illustrated in FIG. 5. The presence or absence and the numbers of the coil and the capacitors in the line filter are not limited to the examples illustrated in FIG. 4 and FIG. 5.

Shield 108 blocks radiated noise (electromagnetic noise) generated from each unit within power supply device 100. For example, shield 108 is made of a metal and is formed so as to integrally cover switching power supply 101, switching power supply 104, and line filters 105, 106, and 107.

### [Operation of power supply device 100]

Hereinafter, an operation of power supply device 100 will be described.

When charging from the power supply to the power storage device (current path indicated by the dotted line arrow), switching power supply 101 converts AC power supplied from the power supply to DC power, and supplies the converted power to the power storage device. In this case, switching power supply 104 does not operate. On this current path, line filter 105 and line filter 106 are interposed between the power supply and the power storage device.

When supplying power from the power supply to the load device (current path indicated by the one-dotted chain line arrow), switching power supply 101 converts AC power supplied from the power supply to DC power. In addition, switching power supply 104 converts a voltage value of the DC power supplied from switching power supply 101, and supplies the power to the load device. On this current path, line filter 105 and line filter 107 are interposed between the power supply and the load device. That is, line filter 106 is not interposed between the power supply and the load device on this current path.

In some cases, charging from the power supply to the power storage device and supplying power from the power supply to the load device are carried out at the same time.

When discharging from the power storage device to the load device (current path indicated by the dashed line arrow), switching power supply 104 converts a voltage value of DC power supplied from the power storage device, and supplies the power to the load device. In this case, switching power supply 101 does not operate. On this current path, line filter 106 and line filter 107 are interposed between the power storage device and the load device.

As described above, both of power supplied when charging from the power supply to the power storage device and power supplied when discharging from the power storage device to the load device go through line filter 106. That is, line filter 106 is used in common when charging from the power supply to the power storage device and when discharging from the power storage device to the load device.

Therefore, the number of line filters in power supply device 100 can be reduced compared to a case where a line filter is provided on both of the input and output sides for each switching power supply as in the related art (refer to FIG. 1 and FIG. 2). Specifically, power supply device 100 may be provided with line filters only as many as the number of connection ports connecting power supply device 100 to external devices (the power supply, the power storage device, and the load device in FIG. 3). Accordingly, an increase in the number of line filters can be minimized even if the number of switching power supplies included in power supply device 100 increases. Accordingly, an increase in the size of power supply device 100 and an increase in the weight thereof can be restricted.

In a case where the load device illustrated in FIG. 3 is driven, charging from the power supply to the power storage device and discharging from the power supply to the load device are carried out at the same time, in some cases. On the contrary, in power supply device 100, charging from the power supply to the power storage device and discharging from the power storage device to the load device are never carried out at the same time. That is, a current from the power supply to the power storage device and a current from the power storage device to the load device never pass line filter 106 at the same time. In addition, the line filter is capable of filtering (attenuation capacity) and having a current capacity. In particular, the current capacity of the line filter depends on a maximum value of a current which flows in the line filter. For example, line filter 106 may have a current capacity having a larger value out of a maximum value of a current which flows from switching power supply 101 to the power storage device (charge current) and a maximum value of a current which flows from the power storage device to switching power supply 104 (discharge current). In other words, line filter 106 is not required to be capable of causing a current having a value obtained by a charge current value and a discharge current value being added together to flow. That is, line filter 106 may have a current capacity which is at a value higher than both of a maximum value of the charge current and a maximum value of the discharge current and which is at a value lower than the total value of the maximum value of the charge current and the maximum value of the discharge current.

For example, a case where the power consumption of the load device is smaller than charging power stored in the power storage device is assumed. In this case, line filter 106 is capable of at least causing the charge current to flow and may be capable of causing a current which has a value lower than the total value of the charge current and the discharge current to the load device to flow.

As described above, since line filter 106 shared by a plurality of switching power supplies is not required to have a capacity which corresponds to combined capacities of a plurality of line filters provided for each switching power supply (line filters 5 and 9 in FIG. 1 and FIG. 2) as in the related art, a smaller and lighter power supply device 100 can be realized.

In addition, on all the current paths (1) to (3) within power supply device 100 described above, only two line filters are interposed between a connection port to a power supply source and a connection port to a power supply destination, respectively. That is, power supply device 100 supplies power to each device via only a minimum number of line filters required.

For example, in the power supply device in the related art (refer to FIG. 1 or FIG. 2), when supplying power from the power supply to the load device, power is required to go through four line filters in total, including line filters 5 and 9, each of which is provided on the side of the power storage device of switching power supplies 1 and 7 as well as line filters 4 and 8 provided at a connection port of the power supply that is a power supply source and at a connection port of the load device that is a power supply destination. Meanwhile, when supplying power from the power supply to the load device in power supply device 100 illustrated in FIG. 3, power may go through only two line filters 105 and 107, each of which is provided at a connection port of the power supply, which is a power supply source, and at a connection port of the load device, which is a power supply destination. That is, when supplying power from the power supply to the load device, the power to be supplied does not go through line filter 106 provided on a side of the power storage device for each of switching power supplies 101 and 104.

Accordingly, in power supply device 100, an increase in loss caused by going through line filters can be prevented by minimizing the number of the line filters that power goes through during power supplying.

As described above, according to the embodiment, an increase in loss due to the line filters and in the size of the circuit of power supply device 100 can be prevented.

Hereinbefore, the embodiment of the present invention has been described. However, the above description is merely an example, and various modifications can be made.

Hereinafter, a first modification example and a second modification example will be described respectively.

### (First modification example)

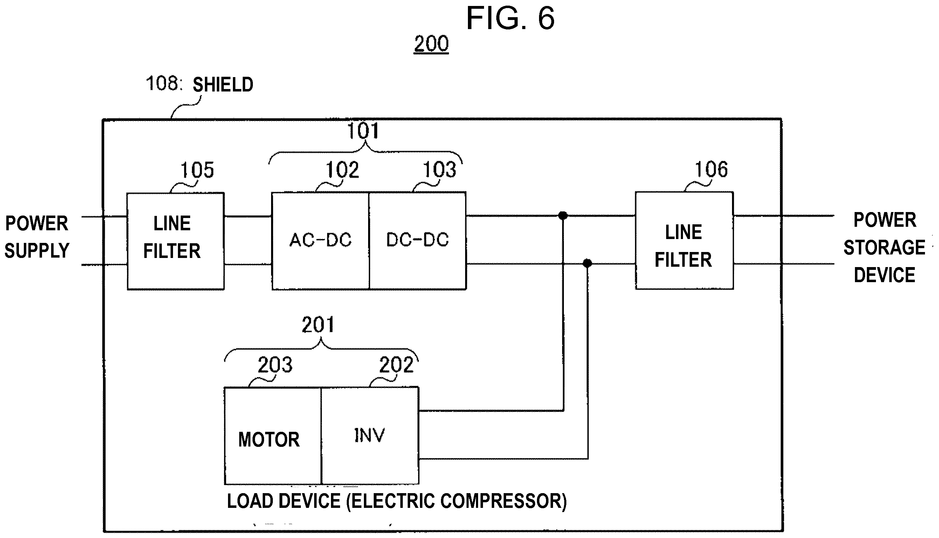

FIG. 6 illustrates a configuration of power supply device 200 according to the first modification example. In FIG. 6, the same configurations as the above embodiment (FIG. 3) will be assigned with the same reference numerals, and description thereof will not be repeated.

In power supply device 200 illustrated in FIG. 6, electric compressor 201 is an example of the load device, and is configured with switching power supply 202 and motor 203. In addition, electric compressor 201 is covered with shield 108. Switching power supply 101 corresponds to the first switching power supply. Switching power supply 202 corresponds to the second switching power supply.

Switching power supply 202 is an inverter, converts DC power supplied from switching power supply 101 or the power storage device to AC power, and supplies the converted power to motor 203.

Motor 203 is driven by the AC power supplied from switching power supply 202, and is used for a heating or a cooling device (not illustrated).

As described above, even in a case where the load device, which is driven with power supplied from switching power supply 101 or the power storage device, is covered with shield 108, the aforementioned embodiment can be applied. In FIG. 6, the current capacity of line filter 106 is lower than the sum of a maximum output current of switching power supply 101 and a maximum input current of switching power supply 202, and is higher than a larger value out of the maximum output current of switching power supply 101 and the maximum input current of switching power supply 202.

### (Second modification example)

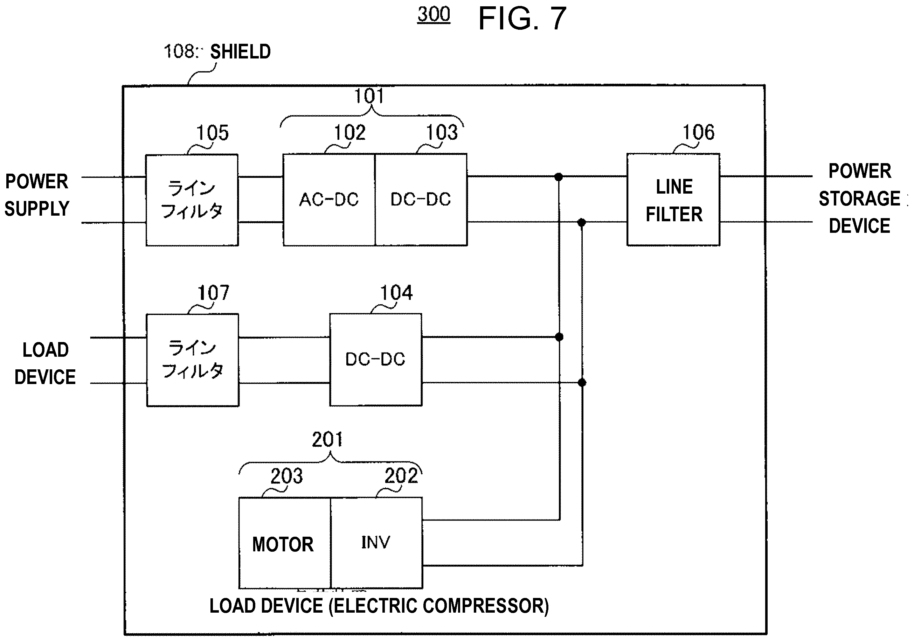

FIG. 7 illustrates a configuration of power supply device 300 according to the second modification example. In FIG. 7, the same configurations as in FIG. 3 and FIG. 6 will be assigned with the same reference numerals, and description thereof will not be repeated.

Power supply device 300 illustrated in FIG. 7 includes a plurality of load devices, each of which has the configuration illustrated in FIG. 3 and the configuration illustrated in FIG. 6. Specifically, power supply device 300 is mainly configured with switching power supply 101 that converts AC power supplied from the power supply to DC power, switching power supply 104 that converts a voltage value of DC power supplied from switching power supply 101 or the power storage device, and electric compressor 201 that is a load device driven with power supplied from switching power supply 101 or the power storage device being integrated. Switching power supply 101 corresponds to the first switching power supply. Switching power supply 104 and switching power supply 202 correspond to the second switching power supply.

As illustrated in FIG. 7, all of switching power supply 101, switching power supply 104, and switching power supply 202 are connected to the power storage device via one line filter 106. That is, line filter 106 is shared by switching power supply 101, switching power supply 104, and switching power supply 202. Accordingly, only one line filter may be provided on the side of the power storage device despite power supply device 300 is provided with three switching power supplies, and thus an increase in the size of the circuit can be restricted. In FIG. 7, the current capacity of line filter 106 is lower than the sum of a maximum output current of switching power supply 101, a maximum input current of switching power supply 104, and a maximum input current of switching power supply 202, and is higher than a larger value out of the sum of the maximum input current of switching power supply 104 and the maximum input current of switching power supply 202, and the maximum output current of switching power supply 101.

In addition, it is assumed that, in power supply device 300, power supplied from the power supply or the power storage device is supplied to an external load device connected via switching power supply 104 and to electric compressor 201 within power supply device 300 at the same time. Meanwhile, in power supply device 300, power supply to the above load devices and power supply to the power storage device from the power supply are never carried out at the same time. Accordingly, line filter 106 may have a capacity to cause a larger current to flow, out of the total value of discharge currents which flow to a plurality of load devices (that is, a plurality of switching power supplies 104 and 202) and the charge current value which flows from the power supply to the power storage device. That is, line filter 106 may have a capacity to cause a current having a lower value, to flow, than the aggregate value of the total value of maximum values of the discharge currents to the plurality of load devices and the maximum value of the charge current.

For example, a case where the total value of the power consumptions of the above external load device and electric compressor 201 is smaller than charging power stored in the power storage device is assumed. In this case, line filter 106 is capable of causing at least a charge current to flow, and may have a capacity to cause a current having a value lower than the total value of the charge current and the discharge current to flow.

Hereinbefore, the first modification example and the second modification example have been described respectively.

In the aforementioned embodiment, although a case where an AC power supply is used as the power supply has been described, the power supply is not limited to the AC power supply and a DC power supply may be used instead. In this case, an AC-DC converter that configures switching power supply 101 becomes unnecessary in the power supply device illustrated in FIG. 3, FIG. 6, and FIG. 7.

In addition, in the aforementioned embodiment, a case where a high-voltage battery is used as the power storage device and a device driven by a low-voltage battery or the low-voltage battery, which is an example of the load device, is used has been described. However, a battery voltage relationship between the power storage device and the load device is not limited thereto. The low-voltage battery may be used as the power storage device, and the high-voltage battery may be used as the load device.

In addition, although the power supply device mounted in the vehicle has been described as an example in the aforementioned embodiment, the power supply device is not limited to a case of being mounted in the vehicle. For example, the power supply device may be a power supply device provided in general households, factories, or the like.

### INDUSTRIAL APPLICABILITY

The present invention can be applied to a power supply device provided with a plurality of switching power supplies.

### REFERENCE MARKS IN THE DRAWINGS

- 100,200,300: power supply device
- 100A: branch point
- 100B: input and output terminal
- 101,104,202: switching power supply
- 102: AC-DC converter
- 103: DC-DC converter
- 105,106,107: line filter
- 108: shield
- 201: electric compressor
- 203: motor

## Claims

1. A power supply device configured to be mounted to a vehicle, the power supply device comprising:
a first switching power supply (101) configured to convert power to be supplied from an AC power supply outside the vehicle to a first converted power by switching, and supply the first converted power to a power storage device;
a second switching power supply (104,202) configured to convert, by switching, the first converted power supplied from the first switching power supply (101) or power supplied from the power storage device to a second converted power, and supply the second converted power to a load device;
a noise filter (106) configured to reduce noise generated in the first switching power supply and the second switching power supply; and
a shield (108) covering the first switching power supply (101), the second switching power supply (104,202), and the noise filter (106),
wherein the noise filter (106) is interposed on a current path between the first switching power supply (101) and the power storage device, between the power storage device and the second switching power supply, and between the power storage device and a branch point (100A) at which a power line from the first switching power supply (101) to the power storage device intersects a power line from the second switching power supply (104,202) to the power storage device; and
wherein a current capacity of the noise filter (106) is higher than any of a first maximum value of a current that flows from the first switching power supply (101) and a second maximum value of a current that flows to the second switching power supply (104,202), and is lower than the total value of the first maximum value and the second maximum value.

2. The power supply device of Claim 1,
wherein the noise filter (106) is not interposed on a current path between the first switching power supply (101) and the second switching power supply (104,202).

3. The power supply device of Claim 1,
wherein the noise filter has a common mode choke coil.

## Patentansprüche

1. Stromversorgungsvorrichtung, die zur Montage in einem Fahrzeug eingerichtet ist, wobei die Stromversorgungsvorrichtung enthält:
eine erste schaltende Stromzufuhr (101), die eingerichtet ist, von einer Wechselstromzufuhr außerhalb des Fahrzeugs zuzuführenden Strom in einen ersten umgewandelten Strom durch Schalten umzuwandeln und den ersten umgewandelten Strom an einer Energiespeichervorrichtung zuzuführen;
eine zweite schaltende Stromzufuhr (104, 202), die eingerichtet ist durch Schalten den ersten, von der ersten schaltenden Stromzufuhr (101) zugeführten umgewandelten Strom oder von der Energiespeichervorrichtung zugeführten Strom in einen zweiten umgewandelten Strom umzuwandeln und den zweiten umgewandelten Strom einer Ladevorrichtung zuzuführen;
ein Rauschfilter (106), das eingerichtet ist in der ersten schaltenden Stromzufuhr und der zweiten schaltenden Stromzufuhr erzeugtes Rauschen zu reduzieren; und
eine Abschirmung (108), die die erste schaltende Stromzufuhr (101), die zweite schaltende Stromzufuhr (104, 202) und das Rauschfilter (106) zu bedecken,
wobei das Rauschfilter (106) auf einen Strompfad zwischen der ersten schaltenden Stromzufuhr (101) und der Energiespeichervorrichtung zwischen der Stromspeichervorrichtung und der zweiten schaltenden Stromzufuhr und zwischen der Energiespeichervorrichtung und einem Abzweigungspunkt (100A), an dem eine Stromleitung von der ersten schaltenden Stromzufuhr (101) zu der Energiespeichervorrichtung eine Stromleitung von der zweiten schaltenden Stromzufuhr (104, 202) zu der Energiespeichervorrichtung schneidet, angeordnet ist, und
wobei eine Stromkapazität des Rauschfilters (106) höher ist als ein erster Maximalwert eines Stroms, der von der ersten schaltenden Stromzufuhr (101) fließt, und ein zweiter Maximalwert eines Stroms der zu der zweiten schaltenden Stromzufuhr (104, 202) fließt, ist und geringer ist als der Gesamtwert geringer ist als der Gesamtwert des ersten Maximalwerts und des zweiten Maximalwerts.

2. Stromzufuhrvorrichtung gemäß Anspruch 1, bei der das Rauschfilter nicht auf einem Strompfad zwischen der ersten schaltenden Stromzufuhr (101) und der zweiten schaltenden Stromzufuhr (104, 202) angeordnet ist.

3. Stromzufuhrvorrichtung gemäß Anspruch 1, bei der das Rauschfilter eine stromkompensierte Drosselspule ist.

## Revendications

1. Dispositif d'alimentation électrique conçu pour être monté sur un véhicule, le dispositif d'alimentation électrique comprenant :
une première alimentation électrique à découpage (101) conçue pour convertir l'électricité devant être alimentée depuis une alimentation électrique CA à l'extérieur du véhicule en première puissance convertie par commutation, et fournir la première puissance convertie en dispositif de stockage d'électricité :
un deuxième alimentation électrique à découpage (104, 202) conçue pour convertir, par commutation, la première puissance convertie fournie depuis la première alimentation électrique à découpage (101) ou une puissance fournie depuis le dispositif de stockage d'électricité en une deuxième puissance convertie, et fournir la deuxième puissance convertie à un dispositif de charge ;
un filtre antibruit (106) conçu pour réduire un bruit généré dans la première alimentation électrique à découpage et la deuxième alimentation électrique à découpage ; et
un écran (108) revêtant la première alimentation électrique à découpage (101), la deuxième alimentation électrique à découpage (104, 202), et le filtre antibruit (106),
le filtre antibruit (106) étant intercalé sur un trajet de courant entre la première alimentation électrique à découpage (101) et le dispositif de stockage d'électricité, entre le dispositif de stockage d'électricité et la deuxième alimentation électrique à découpage, et entre le dispositif de stockage d'électricité et un point de ramification (100A) au niveau duquel une ligne électrique allant de la première alimentation électrique à découpage (101) au dispositif de stockage d'électricité coupe une ligne électrique allant de la deuxième alimentation électrique à découpage (104, 202) au dispositif de stockage d'électricité ; et
une capacité de courant du filtre antibruit (106) étant supérieure à une première valeur maximale d'un courant s'écoulant depuis la première alimentation électrique à découpage (101) et/ou une deuxième valeur maximale d'un courant qui s'écoule vers la deuxième alimentation électrique à découpage (104, 202), et étant inférieure à la valeur totale de la première valeur maximale et la deuxième valeur maximale.

2. Dispositif d'alimentation électrique selon la revendication 1,
dans lequel le filtre antibruit (106) n'est pas intercalé sur un trajet de courant entre la première alimentation électrique à découpage (101) et la deuxième alimentation électrique à découpage (104, 202).

3. Dispositif d'alimentation électrique selon la revendication 1,
dans lequel le filtre antibruit présente une bobine d'étranglement de mode commun.
